# EUROPEAN PATENT APPLICATION

(11) **EP 3 656 366 A1**
(43) Date of publication of application: **27.05.2020**
(21) Application number: 18840974.2
(22) Date of filing: 27.07.2018
(51) Int. Cl.: A61H 21/00, A63B 23/20, A61H 19/00

(54) **DEVICE FOR STIMULATING THE PELVIC FLOOR**

(30) Priority: 01.08.2017 ES 201730926
(71) Applicant: Ecareyou Innovation, S.L., 08191 Rubí (Barcelona) (ES)
(72) Inventor: GARRIGA I RODO, Joan, 08191 Barcelona (ES)
(74) Representative: Espiell Gomez, Ignacio
(86) International application number: PCT/ES2018/070537
(87) International publication number: WO 2019/025654

(57) **Abstract**

Pelvic floor stimulating device, formed by an airtight container (1) that comprises a handle (4) and contains internally a moving mass (2) having unevenesses so that to prevent that it is freely displaced through the container until a sufficient inertial force exists. Preferably the mass (2) is spherical, ovoid or polyhedric, it is formed by a high-density core surrounded by a soft material and it possesses elongated bosses distributed on its surface. Preferably the handle (4) is formed by a flexible strip having a series of knots (5).

## Description

### OBJECT OF THE INVENTION

The invention, as stated in the title of this specification, refers to a pelvic floor stimulating device that presents characteristics of novelty, that will be disclosed in detail thereafter, that means an alternative to the current state-of-the-art.

### FIELD OF APPLICATION OF THE INVENTION

The field of application of this invention is within the sector of the industry engaged in health and rehabilitative exercise.

### BACKGROUND OF THE INVENTION

In the field of rehabilitating and strengthening the pelvic floor, for example, after a delivery, a type of devices is known having a free mass within an airtight container. These devices are introduced in the vagina of the user and her movements lead to blows of the mass on the walls that stimulate the muscles. An example of these devices appears in ES2362919.

The patent ES2362919, the detailed disclosure and figures of which are incorporated as reference, refers to an *"Inertial device for the stimulation of the muscles of the pelvic floor with energy accumulation".* In this case, the inner part of the container is faceted, to modify the behavior of the spherical mass. Its applicant states that, as the mass is on a faceted surface, it requires a given energy to start hitting the walls. Therefore, it would be sure that the blow is always effective because those which are weak are removed. However, it is considered that the said effects are not fully achieved, because nothing prevent the mass rolling with any movement taking profit that it is on a flat surface. That means, it is considered that the sole really effective solution is provided by the invention.

In addition, the device results relatively complicated to be built, because the different facets have to be located in different parts of the enclosure, and when the junction and sealing occur, they are hardly coincident in the position with the accurateness that is sought.

Well then, the objective of this invention is to develop a device for pelvic floor stimulation that offers the previous advantages. It shall be pointed out that, at least the applicant, is not aware of the existence of any other device possessing technical characteristics equal or similar to those herein proposed and claimed.

### EXPLANATION OF THE INVENTION

The device proposed by the invention is configured as a novelty within its field of application, the characterizing details distinguishing it being conveniently appearing in the final claims attached to this specification.

The pelvic floor stimulating device is of the type formed by an airtight container that contains a moving mass within it. The container also possesses a handle to facilitate its withdrawal. In a novel form, the mass is a ball (spherical or ovoid, is generally) having unevenesses so that they prevent that it is freely displaced through the container until a sufficient inertial force exists. Preferably, it is polyhedron-shaped, more preferably having at least 12 faces (even more preferably at least 20 faces), either regular or irregular. This way, it is prevented that the mass rolls, except when there is actually a high energy to be transmitted to the pelvic floor. In addition, one of the preferred embodiments carries out the outline of the mass in an anti-slip material such as silicone, therefore increasing the said effectiveness.

The unevenesses of the mass can also be elongated stubs or bosses (straight or curved) on its surface. This solution provides that, in each position of the mass, it is supported on three or more stubs, or on a stub and a boss, acting the same as if it were polyhedron-shaped. In this form of embodiment, the stubs are at same time the vertices of the polyhedron and the "legs" of the mass.

Preferably, the mass is formed by a high-density core, such as stainless steel or another similar metal, surrounded by a soft material such as silicone.

The general shape of the mass, that means the shape in which it is circumscribed, can be spherical or ovoid among other options. In the first case the movement, and the vibrations, are more predictable and regular, while in the second they are more randomly. On the other hand, the container can also have internal and external spherical or ovoid shapes. In the second case, the handle will be at the flattest end.

As preferred example of handle, a flexible strip with a series of knots (similar to the knots of a branch) is preferred that allow to best grabbing the handle and measuring the depth to which the device has been inserted.

The stimulating device disclosed consists, therefore, in a product having characteristics unknown up to now for the aim to which it is designed, reasons that, jointly to its practical utility, endow it with the ground sufficient to obtain the privilege of exclusivity applied for.

### DISCLOSURE OF THE DRAWINGS

To complement the disclosure that is being made and in order to assist to best understanding the characteristics of the invention, attached to this specification is a set of drawings in which, for illustration and no limitation purpose the following has been represented:
The figure number 1.- It shows a view of the stimulating device, according to an embodiment, in which a container has been opened to see within it and the moving mass, as well as the main elements.
The figure number 2.- It shows a second form of embodiment of the mass, with stubs.

### PREFERRED EMBODIMENT OF THE INVENTION

Concretely, what the invention proposes, as if was previously said is a pelvic floor stimulating device.

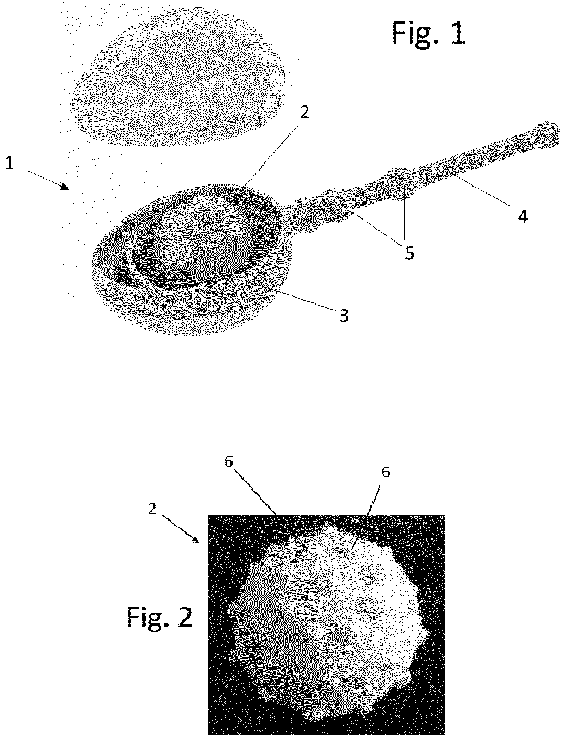

In the figure shown a stimulating device has been represented formed by an airtight container (1) in which a polyhedron-shaped mass (2) is loose. In the figure 1, the said mass (2) is a spherical ball having unevenesses so that they prevent that it is freely displaced through the container until a sufficient inertial force exists. Concretely, in the said figure it is an irregular polyhedron (truncated icosahedron), but it can also be carried out in the form of a regular polyhedron. Anyways, it will have a great number of sides or faces, preferably at least 12 but even more preferably 20 or more. It is preferred that the polyhedron is convex, without recesses or nooks, as it is easier to be made and more effective as for mass/ occupied volume.

The mass (2) is made of a soft material, such as medical silicone, but with a high-density core or inner element (not shown). For example, the core can be of stainless steel. This way, the weight and inertia of the mass (2) are sufficient for the muscles noting its movement.

The container (1) will be made of a material for medical use, such as ABS plastic or polypropylene, with the additives accepted in the medical practice. The joints may comprise a strip (3) of silicone or other sealing material to prevent that matter is introduced that gives rise to the growth of fungi or bacteria.

The container (1) will have a handle (4), that in the embodiment shown is a straight rod of silicone. If it is wished, within the handle an element can be introduced to provide more rigidity to the handle (4). As it has been represented, the section of the handle (4) is variable, as it possesses knots (5) that facilitate gripping and calculating the position of the container (1) within the vagina of the user.

The mass (2) of the figure 1 can be circumscribed in a sphere, but it is also possible that the general shape is ovoid to make that the movement is more randomly. On the contrary, if the shape is ellipsoid, a preferred direction of movement will be created (rolling according to the smaller diameter), therefore it is the less preferred.

The shape of the inner part of the container (1) can be spherical, as it has been shown, or also ovoid. Anyway, the external shape is preferred ovoid to facilitate the insertion, the handle being on the flattest end.

In a second embodiment, shown in the figure 2, the mass (2) has any shape, but it possesses stubs (6) forming "legs" on which been supported. Each group of three or more stubs (6) on a plane forming a supporting "face" of the mass (2), similar to the case of the polyhedron. A similar option is that offering elongated, straight or curved bosses, that offer a similar utility.

If the mass (2) is in itself is polyhedron-shaped and possesses stubs (6), the support of the mass can be an edge of the polyhedron and a stub (6).

## Claims

1. Pelvic floor stimulating device, formed by an airtight container (1) that contains a moving mass (2) and possesses a handle (4) **characterized in that** the mass (2) possesses unevenesses so that they prevent that it freely moves through the container until a sufficient inertial force exists.

2. Device, according to the claim 1, the mass of which (2) is formed by a high-density core surrounded by a soft material.

3. Device, according to the claim 1, the mass of which (2) is generally sphere-shaped

4. Device, according to the claim 1, the mass of which (2) is generally ovoid-shaped.

5. Device, according to the claim 1, the mass of which (2) is a polyhedron.

6. Device, according to the claim 5, the mass of which (2) possesses at least 12 faces.

7. Device, according to the claim 1, the handle of which (4) is formed by a flexible strip having a series of knots (5).

8. Device, according to the claim 1, the container of which (1) possesses a sealing strip (3) at its joints.

9. Device, according to the claim 1, the container of which (1) is internally ovoid-shaped.

10. Device, according to the claim 1, the container of which (1) is externally ovoid-shaped with the handle (4) at the flattest end.

11. Device, according to the claim 2, the soft material of the mass of which (2) is silicone.

12. Device, according to the claim 1, the mass (2) of which possesses stubs (6) distributed on its surface.

13. Device, according to the claim 1, the mass (2) of which possesses elongated bosses distributed on its surface.
